(19) **Europäisches Patentamt / European Patent Office / Office européen des brevets**

(11) **EP 1 826 380 B1**

(12) **EUROPEAN PATENT SPECIFICATION**

(45) Date of publication and mention of the grant of the patent:
**04.08.2010 Bulletin 2010/31**

(51) Int Cl.:
***F02D 37/02*** *(2006.01)*     ***F02P 15/00*** *(2006.01)*

(21) Application number: **06110397.4**

(22) Date of filing: **24.02.2006**

(54) **A method for controlling the idle speed of an internal combustion engine, and an internal combustion engine**

Verfahren zur Steuerung der Leerlauf-Drehzahl einer Brennkraftmaschine, und Brennkraftmaschine

Procédé de commande du ralenti d'un moteur à combustion interne, et moteur à combustion interne

(84) Designated Contracting States:
**DE GB SE**

(43) Date of publication of application:
**29.08.2007 Bulletin 2007/35**

(73) Proprietor: **Ford Global Technologies, LLC Dearborn, MI 48126 (US)**

(72) Inventors:
• **Eriksson, Sören**
**SE-442 90, Kungäl (SE)**
• **Lyngfelt, Thomas**
**SE-414 62, Göteborg (SE)**

• **Solyom, Stefan**
**SE-415 17, Göteborg (SE)**

(74) Representative: **Holmberg, Magnus**
**Albihns.Zacco**
**Valhallavägen 117**
**Box 5581**
**114 85 Stockholm (SE)**

(56) References cited:
| | |
|---|---|
| **EP-A2- 1 010 880** | **DE-A1- 2 918 135** |
| **DE-A1- 4 343 353** | **DE-A1- 10 332 231** |
| **FR-A1- 2 805 569** | |

**Description**

TECHNICAL FIELD

The present invention relates to a method for controlling the idle speed of an internal combustion engine, as well as an internal combustion engine comprising a control unit for controlling the idle speed of the engine.

BACKGROUND

Idling is one of the most often used functionalities in the modem car. This is especially the case in city traffic, where there are frequent stop and go situations. Therefore, improvements of the control performance for the idle speed control unit has always been a high priority. A good control performance keeps the engine speed at a desired set-point value, and ensures good disturbance rejection while maintaining low fuel consumption. Typical disturbances that are to be rejected by the controller are loads from the air-conditioning system, or power steering. Such a disturbance load will manifest itself as a disturbance torque on the engine. Obviously one should be able to compensate for the disturbance by using the throttle, however due to the slow dynamics of the air mass in the intake manifold, this would generate an unacceptably slow disturbance rejection. For this reason a second control signal is used, namely the ignition timing, also referred to as the spark advance. By advancing or retarding the ignition one can obtain an instantaneous torque variation from the engine. However, a deviation from the optimal spark ignition will result in higher fuel consumption. Thus the use of this signal should be kept at minimum and used only for improving the speed of the disturbance rejection. From a control point of view this is a difficult problem since the system in question is nonlinear, multivariable (two inputs) and time varying. Moreover, the throttle control channel has a slower dynamics than that of the ignition timing.

In known art, for example US6688282B1, this problem is usually approached by treating the two control channels separately (one control signal is set to constant while the other is modified), leading to performance degradation, (see also Hrovat, D. and Sun, J. (1997): Models and control methodologies for IC engine idle speed control design, Control Eng. Practice, 5, Nr. 8, pp. 1093-1100).

Some other known approaches treat linearized models resulting in local designs. There are approaches where both control signals are treated in the same time (multivariable control). However the resulting controllers are highly complex and difficult to tune, (see for example Green, J. and Hedrick, J.K. (1990): Nonlinear Speed Control for Automotive Engines, Proc. of the ACC, San Diego, CA, pp.2891-2897, or Stotsky , A. et al. (2000): Variable Structure Control of Engine Idle Speed with Estimation of Unmeasurable Disturbances, Journal of Dynamics Systems, Measurement and Control, Vol. 122, pp.599-603).

FR 2805569 describes a control system for idle speed control, where the ignition timing advance is used to control the air through pat volume.

SUMMARY

An object of the invention is to improve idle speed control of an internal combustion engine.

Another object of the invention is to improve capabilities of keeping the idle speed of an internal combustion engine at a desired position.

Yet another object of the invention is to improve disturbance rejection at idle speed control of an internal combustion engine.

A further object of the invention is to improve disturbance rejection while maintaining a low fuel consumption at idle speed control of an internal combustion engine.

These objects are reached with a method for controlling the idle speed of an internal combustion engine, comprising controlling an ignition timing at least partly based on the engine speed, characterised by controlling a position of a throttle valve at least partly based on the ignition timing. The invention, suitably for engines with spark ignition, provides, as shown closer below, a very fast disturbance rejection. Furthermore, as also shown closer below, the invention provides robustness within a large span of idle speed set points.

Preferably, the ignition timing is controlled so that it is restricted by at least one ignition timing limit, and the position of the throttle valve is controlled at least partly based on the ignition timing as not restricted by the at least one ignition timing limit. As described closer below, this will provide a way to avoid limitations of the throttle control, caused by physical constraints of the ignition timing, such as risks of engine knock and combustion instability. When such physical constraints of the ignition timing are reached, the throttle controller can be augmented such that the throttle will generate more control action. This will infer a faster response to the overall control system, and also a faster convergence of the engine speed to its desired value.

Further advantageous embodiments are defined in the dependent claims 3-6, and described closer below.

The objects are also reached with an internal combustion engine according to any of the claims 7-12.

DESCRIPTION OF THE DRAWINGS

Below, the invention will be described closer with reference to the drawings, in which

- fig. 1 shows schematically parts of an internal combustion engine,
- fig. 2 shows a block diagram depicting a method according to one embodiment of the invention,
- fig. 3 shows a block diagram depicting the method in fig. 2 a cascade control structure,
- fig. 4 shows a diagram with an ignition timing interval, and
- fig. 5-7, show simulation results for three respective idle speed set-points.

DETAILED DESCRIPTION

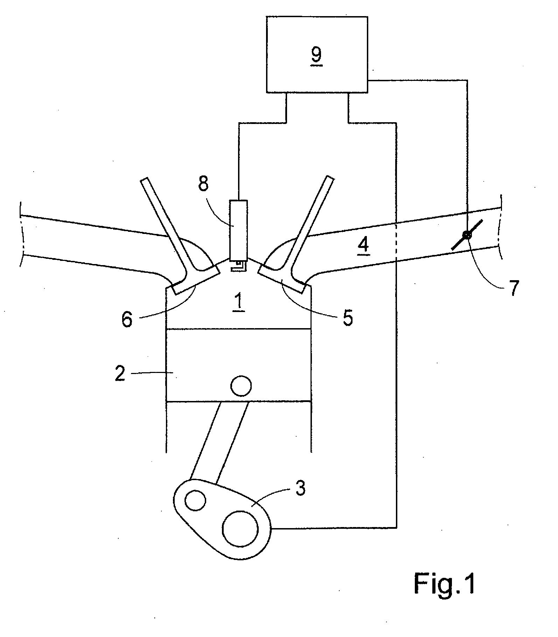

Fig. 1 shows schematically parts of an internal combustion engine, comprising a cylinder 1, a piston 2, a crankshaft 3, an inlet manifold 4, an inlet and an outlet valve 5, 6, a throttle valve 7 in the inlet manifold, and a spark plug 8. A control unit in the form of an engine control unit (ECU) 9 is provided. The ECU 9 has computational and data storage capabilities, and can be provided as one physical unit, or alternatively as a plurality of logically interconnected units. The ECU 9 is arranged to receive signals corresponding to the engine speed, for example by means of a toothed wheel on the crankshaft 3. The ECU 9 is also arranged to send control signals so as to control the position of the throttle valve 7. Further, the ECU is arranged to send control signals so as to control the timing of spark ignitions of the spark plug 8.

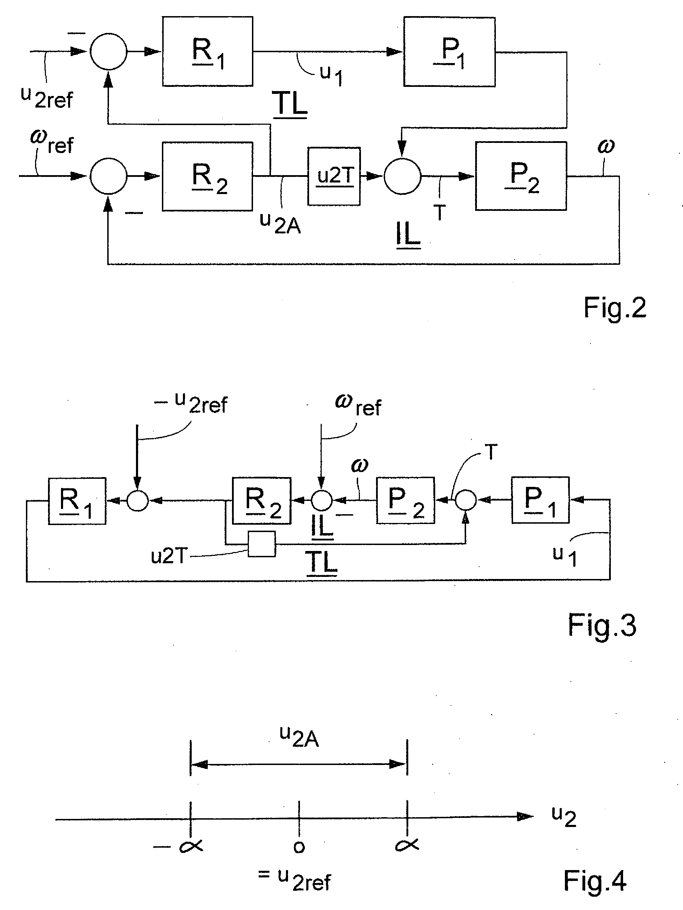

Fig. 2 shows a block diagram depicting the method of the ECU 9 to control the idle speed of the engine. As explained in greater detail below, the method comprises controlling an ignition timing $u_{2A}$ at least partly based on the engine speed $\omega$ , and controlling a position $u_1$ of the throttle valve 7 at least partly based on the ignition timing. The ignition timing $u_{2A}$ is the timing of ignitions of the spark plug 8 in relation the position of the crankshaft 3. As explained closer below, due to physical constraints, such as risks of engine knock and combustion instability, the ignition timing $u_{2A}$ is restricted by ignition timing limits, i.e. it has a limited control authority. For this presentation, the ignition timing restricted in this manner is referred to as the actual ignition timing $u_{2A}$ .

As depicted in fig. 2, the engine speed $\omega$ is controlled by a fast control loop, here also referred to as the ignition timing control loop IL. The ignition timing control loop IL includes an ignition timing controller $R_2$ , suitably a PID controller, adapted to control the actual ignition timing $u_{2A}$ based on the engine speed $\omega$ and a reference value of the engine speed $\omega_{ref}$ ,which could also be referred to as the desired engine speed $\omega_{ref}$. Adjusting the actual ignition timing $u_{2A}$ results in an almost instantaneous torque response from the engine. The influence of the actual ignition timing $u_{2A}$ on the engine torque T is depicted in fig. 2 with a block u2T, and the engine process relating the torque T to the engine speed is depicted with a block $P_2$.

Another loop, herein referred to as the throttle control loop TL, contains slower dynamics, where a throttle controller $R_1$, suitably a PID controller, is adapted to adjust the position of the throttle valve 7, i.e. the throttle angle $u_1$, such that in stationarity, the ignition timing $u_{2A}$

will converge to a reference value of the ignition timing $u_{2ref}$. (The ignition timing $u_{2A}$ can also be referred to as the spark advance $u_2$, defined in relation to the reference value of the ignition timing $u_{2ref}$.)

The reference value of the ignition timing $u_{2ref}$ is a predetermined value chosen so that a good tradeoff is made between a good disturbance rejection and low fuel consumption. Increasing the torque reserve increases the idle speed disturbance rejection capability, but it also increases the low fuel consumption. On the other hand, a small or no torque reserve provides a low fuel consumption but decreases the disturbance rejection capability. More specifically, the engine has an optimal fuel consumption with relation to the delivered torque at MBT (minimum spark advance for the best torque). Any deviation from this point, decreases the efficiency of the engine, but an imposed steady state deviation from MBT provides a torque reserve. In other words, the reference value of the ignition timing $u_{2ref}$ is a predetermined value which differs from a maximum torque providing ignition timing, but which still keeps the fuel consumption relatively low.

The influence of the throttle angle $u_1$ on the engine torque T is depicted in fig. 2 with a block $P_1$. (As stated, the engine process relating the torque T to the engine speed is depicted with a block $P_2$.) It can be seen in fig. 2 that by controlling the throttle position $u_1$ to adjust the ignition timing $u_{2A}$, an indirect adjustment of the engine speed $\omega$ is obtained. The influence of the control signal for the throttle angle $u_1$ on the engine speed $\omega$ is quite slow, but it can generate large torques, i.e. it has a large control authority.

The method described above with reference to fig. 2 means that the throttle is governed by the error between the reference and actual ignition timing, while the ignition timing is governed by the engine speed error. This method can also be depicted as a structure similar to cascade control, with an inner and an outer loop IL, TL, as illustrated in fig. 3. The inner loop IL, controls the ignition timing and the outer loop TL controls the position of the throttle 7. As explained above, the influence of the ignition timing channel is faster than the throttle channel.

Reference is made to fig. 4. As mentioned, due to physical constraints, such as risks of engine knock and combustion instability, the actual ignition timing $u_{2A}$ is bound by ignition timing limits $\alpha$, i.e. it has a limited control authority, in fig. 3a depicted by the interval [-$\alpha$, $\alpha$]. Typically, this authority is not more than $\pm$15 crankshaft angle degrees, in relation to the reference value of the ignition timing $u_{2ref}$ . Since the throttle position is controlled partly based on the ignition timing, it is desirable to avoid limitations of the throttle control due to limitations of the actual ignition timing $u_{2A}$.

To avoid such limitations of the throttle control, the position $u_1$ of the throttle valve 7 can be controlled at least partly based on the ignition timing as not restricted by the ignition timing limits -$\alpha$, $\alpha$. For this presentation, the ignition timing as not restricted by the ignition timing

limits $-\alpha$, $\alpha$ is also referred to as a theoretical ignition timing $u_{2D}$. Thus, the theoretical ignition timing $u_{2D}$ able to assume values outside the limitations $-\alpha$, $\alpha$ of the actual ignition timing $u_{2A}$. Preferably, the method includes establishing a value of the theoretical ignition timing $u_{2D}$, and if this value is outside any of the limits of the actual ignition timing $u_2$, controlling the throttle position partly based on the theoretical ignition timing $u_{2D}$.

One way of doing this is adding, in the process described above, a feedforward term $u_{FF}$ to the reference value of the ignition timing $u_{2ref}$, which term can be defined as follows:

$$u_{FF} = K_{FF} \omega_{ref} \, dzn_\alpha u_{2D},$$

where

$$dzn_\alpha u_{2D} = \begin{cases} u_{2D} - \alpha, & u_{2D} > \alpha \\ 0, & |u_{2D}| \leq \alpha \\ -u_{2D} + \alpha, & u_{2D} < -\alpha \end{cases}$$

where $\alpha$ is the absolute value of the limits of the actual ignition timing $u_{2A}$. In this example, the lower and upper limits of the actual ignition timing are at the same distance $\alpha$ from the reference value $u_{2ref}$, but of course in general the lower and upper limits could be at different distances from the reference value $u_{2ref}$.

The feedforward term $u_{FF}$ provides a way to compare the theoretical ignition timing $u_{2D}$ to the limits of the actual ignition timing $u_{2A}$, and while these are different, augment the throttle controller $R_1$ such that the throttle will generate more control action. This will infer a faster response to the overall control system, and also a faster convergence of the engine speed to its desired value.

As an alternative, the throttle position could be controlled based partly on the theoretical ignition timing $u_{2D}$, but not based on the actual ignition timing $u_{2A}$.

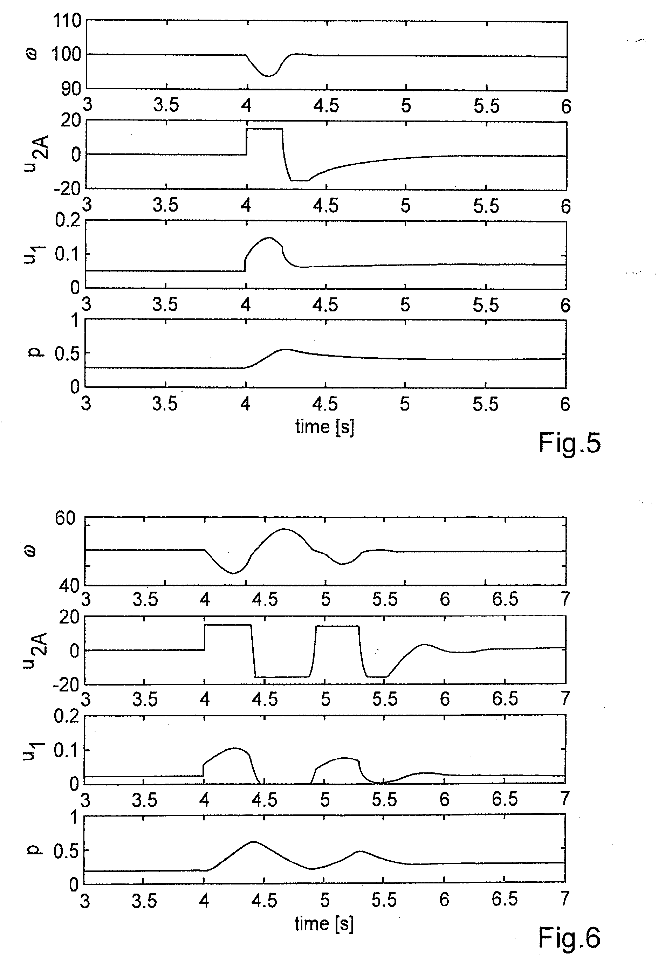

The invention provides a design for idle speed control which is very robust for a large span of idle speed set-points. Support for this can be seen in fig. 5-7, which show simulation results obtained by the inventors for three respective idle speed set-points, while the control system was tuned for 1000 rpm. The simulation scenario consists of 4 seconds where the control system holds the set-point followed by a 20 Nm step disturbance at $t = 4\,s$. The controller compensates for the disturbance by a coordinated action on the ignition timing $u_{2A}$ and the throttle position $u_1$, according to the invention.

In fig. 5, a case is shown with a desired idle speed $\omega_{ref}$ of $100\,rad/s$. As shown in the simulation, the rejection of the disturbance is extremely fast, the engine speed returns to the set-point value within 0.25 seconds without ever falling below 94 rad/s. It is interesting to note that the throttle overshoots its steady state value in order to speed up the disturbance rejection. This requires a negative compensation from the spark advance in order not to overshoot the reference value of the engine speed $\omega_{ref}$ (i.e. the desired engine speed). This cooperation between the two control channels results in a superior control performance.

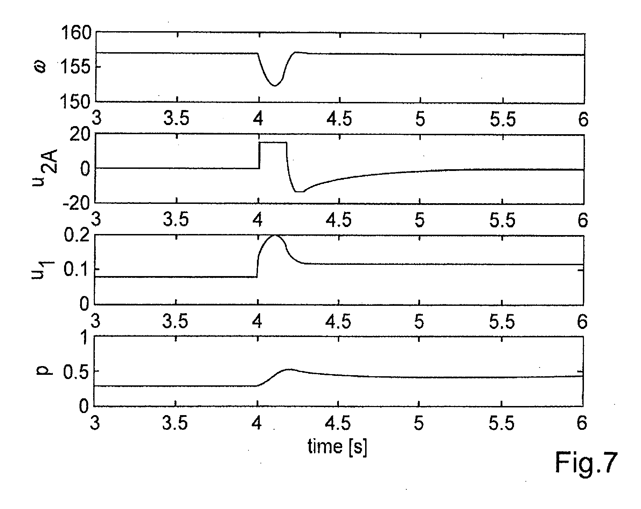

In fig. 6, the response for a reference value of the engine speed $\omega_{ref}$ of $48\,rad/s$ is shown. Normally such a deviation from the nominal set-point is not applied for most vehicle engines, but it is shown to highlight the robustness of the method according to the invention. Finally, fig. 7 shows the case for a high engine speed, 1500 rpm, demonstrating the fast response and robustness of the method according to the invention.

**Claims**

1. A method for controlling the idle speed of an internal combustion engine, comprising controlling an ignition timing ($u_{2A}$) at least partly based on the engine speed ($\omega$) and so that the ignition timing ($u_{2A}$) is restricted by at least one ignition timing limit ($\alpha$); **characterised by** controlling the position ($u_1$) of the throttle valve (7) at least partly based on the ignition timing ($u_{2D}$) as not restricted by the at least one ignition timing limit ($\alpha$).

2. A method according to claim 1, including determining a theoretical value of the ignition timing ($u_{2D}$), and if the theoretical value of the ignition timing ($u_{2D}$) is outside the at least one ignition timing limit ($\alpha$), controlling the position of the throttle valve (7) partly based on the ignition timing ($u_{2D}$) as not restricted by the at least one ignition timing limit ($\alpha$).

3. A method according to any of the preceding claims, wherein the position ($u_1$) of the throttle valve (7) is controlled partly based on a reference value of the ignition timing ($u_{2ref}$).

4. A method according to claim 3, wherein the reference value of the ignition timing ($u_{2ref}$) is a predetermined value which is different from an ignition timing value providing a maximum torque of the engine at idling.

5. A method according to any of the preceding claims, wherein the ignition timing controlled at least partly based on a reference value of the engine speed ($\omega_{ref}$).

6. An internal combustion engine comprising a control unit (9) for controlling the idle speed of the engine, the control unit (9) being adapted to control an ignition timing ($u_{2A}$) at least partly based on the engine

speed ($\omega$), and so that the ignition timing ($u_{2A}$) is restricted by at least one ignition timing limit ($\alpha$), **characterised in that** the control unit (9) is adapted to control the position ($u_1$) of the throttle valve (7) at least partly based on the ignition timing ($u_{2D}$) as not restricted by the at least one ignition timing limit ($\alpha$).

7. An internal combustion engine according to claim 6, wherein the control unit (9) is adapted to determine a theoretical value of the ignition timing ($u_{2D}$), and to control, if the theoretical value of the ignition timing ($u_{2D}$) is outside the at least one ignition timing limit ($\alpha$), the position of the throttle valve (7) partly based on the ignition timing ($u_{2D}$) as not restricted by the at least one ignition timing limit ($\alpha$).

8. An internal combustion engine according to any of the claim 6-7, wherein the control unit (9) is adapted to control the position ($u_1$) of the throttle valve (7) partly based on a reference value of the ignition timing ($u_{2ref}$).

9. An internal combustion engine according to claim 8, wherein the reference value of the ignition timing ($u_{2ref}$) is a predetermined value which is different from an ignition timing value providing a maximum torque of the engine at idling.

10. An internal combustion engine according to any of the claim 6-10, wherein the control unit (9) is adapted to control the ignition timing at least partly based on a reference value of the engine speed ($\omega_{ref}$).

## Patentansprüche

1. Verfahren zum Steuern der Leerlaufgeschwindigkeit eines Verbrennungsmotors, umfassend: Steuern einer Zündzeiteinstellung ($u_{2A}$) zumindest teilweise basierend auf der Motorgeschwindigkeit ($\omega$), und so dass die Zündzeiteinstellung ($u_{2A}$) durch zumindest eine Zündzeiteinstellungsgrenze ($\alpha$) beschränkt ist, **gekennzeichnet durch** ein Steuern der Position ($u_1$) des Drosselventils (7) zumindest teilweise basierend auf der Zündzeiteinstellung ($u_{2D}$) als nicht **durch** die zumindest eine Zündzeiteinstellungsgrenze ($\alpha$) beschränkt.

2. Verfahren gemäß Anspruch 1, aufweisend: Bestimmen eines theoretischen Werts der Zündzeiteinstellung ($u_{2D}$), und falls sich der theoretische Wert der Zündzeiteinstellung ($u_{2D}$) außerhalb der zumindest einen Zündzeiteinstellungsgrenze ($\alpha$) befindet, Steuern der Position des Drosselventils (7) teilweise basierend auf der Zündzeiteinstellung ($u_{2D}$) als nicht durch die zumindest eine Zündzeiteinstellungsgrenze ($\alpha$) beschränkt.

3. Verfahren gemäß einem der vorangegangenen Ansprüche, bei dem die Position ($u_1$) des Drosselventils (7) teilweise basierend auf einem Referenzwert der Zündzeiteinstellung ($u_{2ref}$) gesteuert wird.

4. Verfahren gemäß Anspruch 3, bei dem der Referenzwert der Zündzeiteinstellung ($u_{2ref}$) ein vorbestimmter Wert ist, der von dem ein Maximalmoment des Motors beim Leerlauf bereitstellenden Zündzeiteinstellungswert verschieden ist.

5. Verfahren gemäß einem der vorangegangenen Ansprüche, bei dem die Zündzeiteinstellung zumindest teilweise basierend auf einem Referenzwert der Motorgeschwindigkeit ($\omega_{ref}$) gesteuert wird.

6. Verbrennungsmotor mit einer Steuereinheit (9) zum Steuern der Leerlaufgeschwindigkeit des Motors, bei dem die Steuereinheit (9) eine Zündzeiteinstellung ($u_{2A}$) zumindest teilweise basierend auf der Motorgeschwindigkeit ($\omega$) steuern kann, und so dass die Zündzeiteinstellung ($u_{2A}$) durch zumindest eine Zündzeiteinstellungsgrenze ($\alpha$) beschränkt ist, **dadurch gekennzeichnet, dass** die Steuereinheit (9) die Position ($u_1$) des Drosselventils (7) zumindest teilweise basierend auf der Zündzeiteinstellung ($u_{2D}$) als nicht durch die zumindest eine Zündzeiteinstellungsgrenze ($\alpha$) beschränkt steuern kann.

7. Verbrennungsmotor gemäß Anspruch 6, bei dem die Steuereinheit (9) einen theoretischen Wert der Zündzeiteinstellung ($u_{2D}$) bestimmen kann, und, falls sich der theoretische Wert der Zündzeiteinstellung ($u_{2D}$) außerhalb der zumindest einen Zündzeiteinstellungsgrenze ($\alpha$) befindet, die Position des Drosselventils (7) teilweise basierend auf der Zündzeiteinstellung ($u_{2D}$) als nicht durch die zumindest eine Zündzeiteinstellungsgrenze ($\alpha$) beschränkt steuern kann.

8. Verbrennungsmotor gemäß einem der Ansprüche 6-7, bei dem die Steuereinheit (9) die Position ($u_1$) des Drosselventils (7) zumindest teilweise basierend auf einem Referenzwert der Zündzeiteinstellung ($u_{2ref}$) steuern kann.

9. Verbrennungsmotor gemäß Anspruch 8, bei dem der Referenzwert der Zündzeiteinstellung ($u_{2ref}$) ein vorbestimmter Wert ist, der von dem ein Maximalmoment des Motors beim Leerlauf bereitstellenden Zündzeiteinstellungswert verschieden ist.

10. Verbrennungsmotor gemäß einem der Ansprüche 6-9, bei dem die Steuereinheit (9) die Zündzeiteinstellung zumindest teilweise basierend auf einem Referenzwert der Motorgeschwindigkeit ($\omega_{ref}$) steuern kann.

**Revendications**

1. Procédé pour commander la vitesse à vide d'un moteur à combustion interne, comprenant la commande d'un réglage de l'allumage ($u_{2A}$) au moins en partie en se basant sur la vitesse du moteur ($\omega$) et de sorte que le réglage de l'allumage ($u_{2A}$) soit restreint par au moins une limite de réglage de l'allumage ($\alpha$) ; **caractérisé par** la commande de la position ($u_1$) du papillon des gaz (7) en se basant au moins en partie sur le réglage de l'allumage ($u_{2D}$) quand il n'est pas restreint par la au moins une limite de réglage de l'allumage ($\alpha$).

2. Procédé selon la revendication 1, comprenant la détermination d'une valeur théorique du réglage de l'allumage ($u_{2D}$), et si la valeur théorique du réglage de l'allumage ($u_{2D}$) se situe en dehors de la au moins une limite de réglage de l'allumage ($\alpha$), la commande de la position du papillon des gaz (7) en se basant en partie sur le réglage de l'allumage ($u_{2D}$) quand il n'est pas restreint par la au moins une limite de réglage de l'allumage ($\alpha$).

3. Procédé selon l'une quelconque des revendications précédentes, dans lequel la position ($u_1$) du papillon des gaz (7) est commandée en partie en se basant sur une valeur de référence du réglage de l'allumage ($u_{2réf}$).

4. Procédé selon la revendication 3, dans lequel la valeur de référence du réglage de l'allumage ($u_{2réf}$) est une valeur prédéterminée qui est différente d'une valeur de réglage de l'allumage fournissant un couple de torsion maximal du moteur au ralenti.

5. Procédé selon l'une quelconque des revendications précédentes, dans lequel le réglage de l'allumage est commandé en se basant au moins en partie sur une valeur de référence de la vitesse du moteur ($\omega_{réf}$).

6. Moteur à combustion interne comprenant une unité de commande (9) pour commander la vitesse à vide du moteur, l'unité de commande (9) étant adaptée pour commander un réglage de l'allumage ($u_{2A}$) en se basant au moins en partie sur la vitesse du moteur ($\omega$), et de sorte que le réglage de l'allumage ($u_{2A}$) soit restreint par au moins une limite de réglage de l'allumage ($\alpha$), **caractérisé en ce que** l'unité de commande (9) est adaptée pour commander la position ($u_1$) du papillon des gaz (7) en se basant au moins en partie sur le réglage de l'allumage ($u_{2D}$) quand il n'est pas restreint par la au moins une limite de réglage de l'allumage ($\alpha$).

7. Moteur à combustion interne selon la revendication 6, dans lequel l'unité de commande (9) est adaptée pour déterminer une valeur théorique du réglage de l'allumage ($u_{2D}$), et pour commander, si la valeur théorique du réglage de l'allumage ($u_{2D}$) se situe en dehors de la au moins une limite du réglage de l'allumage ($\alpha$), la position du papillon des gaz (7) en se basant en partie sur le réglage de l'allumage ($u_{2D}$) quand il n'est pas restreint par la au moins une limite du réglage de l'allumage ($\alpha$).

8. Moteur à combustion interne selon l'une quelconque des revendications 6 et 7, dans lequel l'unité de commande (9) est adaptée pour commander la position ($u_1$) du papillon des gaz (7) en se basant en partie sur une valeur de référence du réglage de l'allumage ($u_{2réf}$).

9. Moteur à combustion interne selon la revendication 8, dans lequel la valeur de référence du réglage de l'allumage ($u_{2réf}$) est une valeur prédéterminée qui est différente d'une valeur de réglage de l'allumage fournissant un couple de torsion maximal du moteur au ralenti.

10. Moteur à combustion interne selon l'une quelconque des revendications 6 à 10, dans lequel l'unité de commande (9) est adaptée pour commander le réglage de l'allumage en se basant au moins en partie sur une valeur de référence de la vitesse du moteur ($\omega_{réf}$).

Fig.1

Fig.2

Fig.3

Fig.4

Fig.5

Fig.6

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6688282 B1
- FR 2805569

**Non-patent literature cited in the description**

- **HROVAT, D. ; SUN, J.** Models and control methodologies for IC engine idle speed control design. *Control Eng. Practice,* 1997, vol. 5 (8), 1093-1100
- **GREEN, J. ; HEDRICK, J.K.** Nonlinear Speed Control for Automotive Engines. *Proc. of the ACC,* 1990, 2891-2897
- **STOTSKY , A. et al.** Variable Structure Control of Engine Idle Speed with Estimation of Unmeasurable Disturbances. *Journal of Dynamics Systems, Measurement and Control,* 2000, vol. 122, 599-603